# EUROPÄISCHE PATENTSCHRIFT

(11) **EP 2 776 274 B1**
(45) Veröffentlichungstag und Bekanntmachung des Hinweises auf die Patenterteilung: **21.12.2016**
(21) Anmeldenummer: 12808673.3
(22) Anmeldetag: 30.10.2012
(51) Int. Cl.: B60N 2/06, B60N 2/23, B60N 2/02

(54) **VERSTELLGETRIEBE, INSBESONDERE ZUR SITZLÄNGSVERSTELLUNG EINES KFZ-SITZES**
ADJUSTING GEARING, PARTICULARLY FOR LONGITUDINAL SEAT ADJUSTMENT IN A MOTOR VEHICLE
MÉCANISME DE RÉGLAGE, EN PARTICULIER POUR UN SIÈGE DE VÉHICULE AUTOMOBILE RÉGLABLE EN LONGUEUR

(30) Priorität: 07.11.2011 DE 102011085873
(43) Veröffentlichungstag der Anmeldung: 17.09.2014
(73) Patentinhaber: IMS Gear SE & Co. KGaA, 78166 Donaueschingen (DE); Johnson Controls Metals and Mechanisms GmbH & Co. KG, 42699 Solingen (DE)
(72) Erfinder: URBAN, Daniel, 40625 Düsseldorf (DE); LANDSKRON, Robert, 40789 Monheim (DE); KARADAG, Arif, 42799 Leichlingen (DE); HOFSCHULTE, Wolfram, 79848 Bonndorf (DE); KRIMMEL, Fred, 72458 Albstadt (DE)
(74) Vertreter: Westphal, Mussgnug & Partner Patentanwälte mbB
(86) Internationale Anmeldenummer: PCT/DE2012/100333
(87) Internationale Veröffentlichungsnummer: WO 2013/068000

(56) Entgegenhaltungen:
- WO-A1-02/070299
- DE-A1-102006 006 925
- DE-A1-102008 046 274

## Beschreibung

Die Erfindung betrifft ein Verstellgetriebe, insbesondere zur Sitzlängsverstellung eines Kfz-Sitzes, gemäß den Merkmalen des Oberbegriffs des Anspruchs 1.

Solche Verstellgetriebe sind z.B. aus der DE 10 2008 046 274 A1, DE 10 2006 006 925 A1 und der WO 02/070299 A1 bekannt

Ein solch ähnliches Verstellgetriebe ist beispielsweise aus DE 36 40 197 A1 bekannt. Dort ist zur Aufbringung einer Kraft auf einen Sitz eines Kraftfahrzeuges ein Motor vorgesehen, der an einem unteren Halteteil der Fahrzeugkarosserie festgelegt ist. Der Motor treibt eine Antriebsvorrichtung für den verstellbaren Sitz an. Diese Antriebsvorrichtung verfügt über ein Getriebegehäuse, welches fest an dem unteren Halteteil angebracht ist sowie eine Spindel, die mit dieser Antriebsvorrichtung verbunden ist. Über ein Mutterelement ist die Spindel mit einem oberen Halteteil gekoppelt, so dass das obere Halteteil relativ zum unteren Halteteil längsverschiebbar ist. Eine Drehung der Spindel bewirkt eine Verschiebung des Mutterelements entlang der Spindel, wodurch das obere Halteteil und der damit verbundene Sitz relativ zu dem unteren Halteteil vor- und zurückbewegt werden kann. Das Getriebegehäuse besteht hierbei vollständig aus Metall und nimmt ein Ende der Spindel auf, auf dem eine Spindelmutter aufsitzt. Diese Spindelmutter steht mit einer Antriebsschnecke in Verbindung, welche von dem Motor über eine geeignete Motorwelle angetrieben wird.

Ein ähnliches Verstellgetriebe zeigt die FR 2749053. Dort ist ebenfalls eine aus einem Getriebegehäuse herausragende Spindel offenbart. Die Spindel ragt aus einem Getriebegehäuse, welches an einer Oberschiene einer Kfz-Sitzverstellung festgelegt ist. Die Spindel durchragt ein Mutterelement, das am Bodenchassis des Kraftfahrzeuges feststehend befestigt ist. Bei Drehung der Spindel bewegt sich die Oberschiene in Bezug zur am Bodenblech des Fahrzeugchassis befestigten Unterschiene, je nach Drehrichtung der Spindel, vor oder zurück.

Im Crashfall des Kraftfahrzeuges treten hohe Kräfte auf, die den Kraftfahrzeugsitz aus der Schienenführung bringen können, was natürlich ein hohes Sicherheitsrisiko bedeutet. Dieses Sicherheitsrisiko muss minimiert werden. Deshalb sieht die FR 2749053 einen besonderen Crashschutz vor. Der Crashschutz besteht im Wesentlichen in einer Stützscheibe aus Metall, welche zwischen dem Getriebegehäuse und dem Mutterelement angeordnet ist. Die Stützscheibe ist nahe am Getriebegehäuse auf der Spindel befestigt und ragt dabei mit ihren äußeren Abmessungen in eine Öffnung der oberen Sitzschiene. Die Öffnung der oberen Sitzschiene ist dabei so bemessen, dass sich die Stützscheibe im normalen Betrieb frei in dieser Öffnung drehen kann. Hierfür ist die in Bezug auf die Spindelachse vorgesehene Öffnung in der oberen Schiene etwas größer als die Breite der Stützscheibe gewählt. Im Crashfall, also wenn axiale Kräfte auf den Sitz einwirken, kann diese Stützscheibe an der Oberschiene anschlagen, was einen wirksamen Crashschutz bewirkt.

Problematisch ist der verhältnismäßig komplizierte Aufbau dieses Verstellgetriebes. Die Oberschiene muss mit einer separaten Öffnung versehen werden, in der die Stützscheibe als separates Bauteil, welches auf die Spindel aufgeschweißt werden muss, eingreifen kann. Problematisch ist auch, dass die Schienenführung unsymmetrisch aufgebaut ist.

Der vorliegenden Erfindung liegt die Aufgabe zugrunde, ein Verstellgetriebe, insbesondere zur Sitzlängsverstellung eines

Kfz-Sitzes anzugeben, das eine wirksame Crash-Abstützung erlaubt und keiner separaten Stützscheibe bedarf.

Diese Aufgabe wird durch ein Verstellgetriebe mit den Merkmalen des Anspruchs 1 gelöst.

Die Erfindung beruht im Wesentlichen darauf, dass die erforderliche Crash-Abstützung durch ein besonders gestaltetes Getriebegehäuse erfolgt. Das Getriebegehäuse besteht aus Kunststoff, in den mindestens ein Metalleinlegeteil integriert ist, welcher die durch einen Front- oder Heckaufprall auftretenden Kräfte der Gewindespindel auf die Sitzoberschiene überträgt und somit einen ausreichenden Kraftschluss zwischen Sitzober- und Unterschiene ermöglicht.

Hierfür verfügt das Verstellgetriebe über ein Getriebegehäuse, das an einem ersten Teil, Z. B die Oberschiene eines SLV-(Sitzlängsverstell-)-Getriebes festgelegt ist. Dieses erste Teil ist relativ zu einem zweiten Teil, z.B. die Unterscheine einer Kfz-Sitzlängsverstelleinrichtung verschieblich. Innerhalb des Getriebegehäuses ist ein Getriebe angeordnet, wobei aus dem Getriebegehäuse eine Spindel hervorragt und wobei die Spindel über ein Mutterelement an das zweite Teil gekoppelt ist. Das Getriebegehäuse besteht erfindungsgemäß aus Kunststoff. Allerdings ist gegenüber herkömmlichen Kunststoffgehäusen in den Kunststoff mindestens ein mehrfach abgewinkeltes Metalleinlegeteil, d.h. ein Metallkäfig, eingebettet.

Zur Erhöhung der Crashfestigkeit werden zwei oder mehr Wandungen des Metalleinlegeteils oder mehrerer Metalleinlegeteile unmittelbar hintereinander orthogonal zur Spindelachse ausgerichtet sein und die Spindel auf der dem Mutterelement zugeordneten Seite des Getriebegehäuses mindestens teilweise umgreifen. Damit umgreift quasi ein Metallplattenpaket die Spindel und nimmt im Crashfall Axialkräfte auf.

In einer Weiterbildung können die beiden oder mehreren nebeneinander liegenden Wandungen aus einer einstückigen metallischen Gehäuseschale abgewinkelt sein oder aber durch zwei ineinander greifende, separate Metalleinlegeteile gebildet werden.

Bevorzugt ist das Getriebegehäuse so ausgebildet, dass sämtliche Lagerstellen des Getriebegehäuses vollumfänglich aus Kunststoff bestehen bzw. von Kunststoff umgeben sind. Erfindungsgemäß brauchen somit keine separaten Lagerbuchsen als zusätzliche Bauteile vorgesehen werden. Damit ist die Toleranzkette verbessert.

Des Weiteren ist es möglich, dass auch auf der dem Mutterelement abgewandten Seite des Getriebegehäuses Wandungen der Metalleinlegeteile vorgesehen sind, die ebenfalls orthogonal zur Spindelachse liegen.

Des Weiteren liegt es im Rahmen der Erfindung, dass an das mindestens eine Metalleinlegeteil eine Wandung als Befestigungslasche des Getriebegehäuses einstückig angeformt ist. Über diese Befestigungslasche kann z.B. das Getriebegehäuse mit der Oberschiene der Sitzverstelleinrichtung verbunden, beispielsweise verschraubt, werden.

Es hat sich als zweckmäßig und einfach herstellbar erwiesen, dass das mindestens eine Metalleinlegeteil als Stanzbiegeteil oder Tiefziehteil ausgebildet ist.

In einer Weiterbildung des Verstellgetriebes ist vorgesehen, dass an das Getriebegehäuse aus Kunststoff ein rohrförmiger Flansch zum Einführen einer Antriebswelle angeformt ist.

Des Weiteren können zur Erhöhung der Festigkeit des im Kunststoffgehäuse eingebetteten oder eingespritzten Metallkäfigs bei Verwendung mehrerer abgewinkelter, Metalleinlegeteile zur Bildung dieses Metallkäfigs diese miteinander verschweißt sein.

Obwohl prinzipiell das Verstellgetriebe mit einer stehenden oder drehenden Spindel ausgestattet sein kann, wird das Konzept eines Verstellgetriebes mit drehender Spindel vorliegend bevorzugt. Darüber hinaus ist es auch grundsätzlich möglich, dass anstelle einer Spindel eine Zahnstange zum Einsatz kommt, welche mit dem im Getriebegehäuse befindlichen Getriebeteilen in Eingriff steht.

Erfindungsgemäß ist der Kunststoff des Getriebegehäuses farblich an das erste Teil, also die Oberschiene oder zweite Teil, also die Unterschiene oder eine mit diesen beiden Teilen verbundene Einrichtung, z.B. ein auf dem Sitzgestühl befindliches Sitzpolster oder eine Verblendung der Sitzschiene oder ein Fahrzeugteppich angepasst. Im Vergleich zu üblicherweise verwendeten Metallgehäuses (aus Zink, Aluminium oder Stahl), bei denen für eine farbliche Anpassung diese aufwändig lackiert werden müssen, kann durch eine individuelle Einfärbung des Kunststoffes eine optimale optische Anpassung des Getriebegehäuses an die Umgebung erfolgen.

Die Erfindung und deren Vorteile werden nachfolgend im Zusammenhang mit Ausführungsbeispielen näher erläutert. Es zeigen:
- Fig. 1: Ein Verstellgetriebe zur Sitzlängsverstellung eines Kfz-Sitzes mit Getriebegehäuse, Spindel, Mutterelement sowie angedeuteter Oberschiene und Unterschiene,
- Fig. 2: das Verstellgetriebe von Figur 1 ausschnittsweise im Bereich des Getriebegehäuses mit zwei Gehäuseteilen und zwei Metalleinlegeteilen in perspektivischer Ansicht von schräg vorn,
- Fig. 3: das Verstellgetriebe von Figur 2 in perspektivischer Ansicht von schräg hinten mit in die zwei Gehäuseteile bereits eingelegten Metalleinlegeteilen, und
- Fig. 4: eine Schnittansicht des Verstellgetriebes von Figur 3 entlang einer vertikal durch das Getriebegehäuse verlaufenden und die Spindelachse schneidenden Schnittebene.

In den nachfolgenden Figuren bezeichnen gleiche Bezugszeichen gleiche Teile mit gleicher Bedeutung.

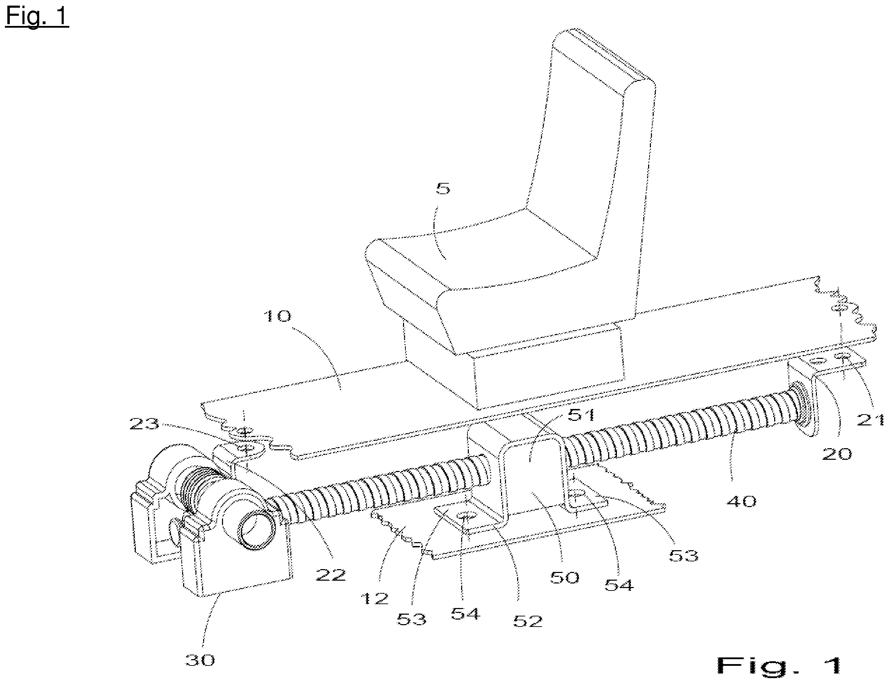

In Fig. 1 ist beispielhaft eine Sitzlängsverstelleinrichtung für einen Kraftfahrzeugsitz schematisch dargestellt. Der Sitz 5 ist auf einem Sitzgestühl montiert, welches feststehend mit einem ersten Teil 10, in diesem Fall eine Oberschiene, verbunden ist. Dieses erste Teil 10 ist relativ zu einem zweiten Teil 12, hier eine Unterschiene, verfahrbar. Das zweite Teil 12 ist z.B. mit dem Chassisboden eines Kfz feststehend verbunden, indem dieses zweite Teil an den Chassisboden des Kfz geschraubt ist.

Die relative Längsbewegung von ersten Teil 10 zum zweiten Teil 12 wird durch ein Verstellgetriebe erreicht. Hierfür weist das Verstellgetriebe ein Getriebegehäuse 30 auf, in dem ein Getriebe sitzt. Dieses Getriebe beinhaltet z.B. eine mit einem nicht dargestellten Motor gekoppelte Antriebsschnecke, welche mit einer Spindelmutter kämmt. Die Spindelmutter sitzt dabei drehfest auf einer Spindel 40 auf, welche vorzugsweise einseitig aus dem Getriebegehäuse 30 herausragt. Dabei ist das Getriebegehäuse 30 über einen Befestigungsbügel 22 und das andere Ende der Spindel 40 über eine weitere Befestigungslasche 20 mit dem ersten Teil 10 feststehend verbunden, z.B. über Befestigungsöffnungen 21, 23 verschraubt. Das andere Ende der Spindel 40 ist an der Befestigungslasche 20 drehbar gelagert.

Auf der Spindel 40 sitzt ein Nuss- oder Mutterelement 50, welches wiederum feststehend mit dem zweiten Teil 12, also der Unterschiene, verbunden ist. Dieses Mutterelement 50 verfügt im Wesentlichen über einen Mutternblock 51, der ein Innengewinde aufweist, in welcher die Spindel 40 drehen kann. Dieser Mutternblock 51 wird von einem U-förmigen Bügel 52, durch dessen beiden U-Schenkel die Spindel 40 ragt, gehalten. Über Befestigungslaschen 53 mit Bohrungen 54 ist dieser U-förmige Bügel 52 an das zweite Teil 12, also die Unterschiene, festgeschraubt.

Wird die Antriebsschnecke des Getriebes über den nicht gezeigten Motor in Drehung versetzt, dreht sich auch die Spindel 40. Eine Drehung der Spindel 40 sorgt dafür, dass sich je nach Drehrichtung der Spindel 40, das obere Teil 10 und damit die Oberschiene samt darauf befindlichen Sitz 5 in der Darstellung von Figur 1 nach rechts und damit den Sitz 5 rückwärts oder das obere Teil 10 nach links und damit den Sitz 5 nach vorne bewegt.

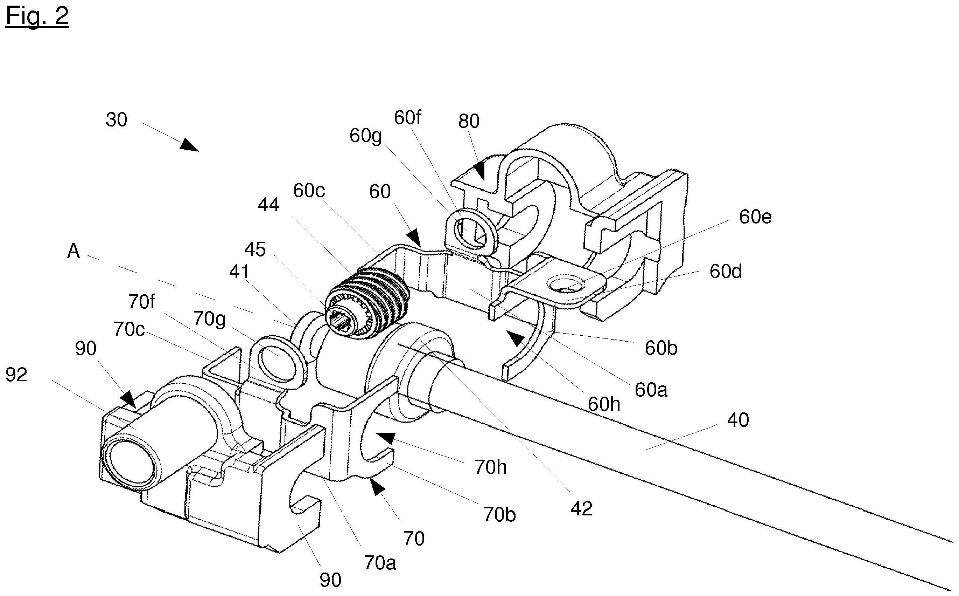

Die besonders crashsichere Gestaltung des Getriebegehäuses 30 geht aus den nachfolgenden Figuren 2 bis 4 hervor.

Figur 2 zeigt das Verstellgetriebe von Figur 1 ausschnittsweise im Bereich des Getriebegehäuses 30 schräg von vorn oben in perspektivischer Ansicht. Das Getriebegehäuse 30 besteht aus zwei Gehäuseteilen 80, 90. In jedem dieser Gehäuseteile 80, 90 ist ein Metalleinlegeteil 60, 70 platziert. Die Metalleinlegeteile 60, 70 sind bevorzugter Weise als Stanzbiegeteile oder Formgussteile ausgebildet und in die Gehäuseteile 80, 90 entweder eingelegt oder von diesen in geeigneter Weise umspritzt. Die beiden Gehäuseteile 80, 90 mit den darin befindlichen Metalleinlegeteilen 60, 70 umgreifen ein Ende der Spindel 40, an welchem eine Spindelmutter 42 und in bevorzugter Weise auch eine z. B. scheibenförmige Abschlussplatte 41 angeordnet sind. Die Spindelmutter 42 kämmt mit einer Antriebsschnecke 44, die einseitig oder bevorzugter Weise auf beiden Enden mit einer Öffnung 45 zum Einstecken einer Antriebswelle versehen ist. Die beiden Gehäuseteile 80, 90 mit den Metalleinlegeteilen 60, 70 umgreifen auch die Antriebsschnecke 44. Bevorzugter Weise werden die beiden Gehäuseteile 80, 90 nach erfolgter Montage miteinander in geeigneter Weise befestigt, zum Beispiel miteinander ultraschallverschweißt, geklebt, heißverstemmt, laserverschweißt, genietet oder geschraubt. Das in Figur 2 lins unten dargestellte Gehäuseteil 90 verfügt noch über einen rohrförmigen Flansch 92, durch den eine nicht dargestellte Antriebswelle mit der Öffnung 45 der Antriebsschnecke 44 gekoppelt werden kann.

Die beiden Metalleinlegeteile 60, 70 sind zur Erhöhung der Crash-Festigkeit des Getriebegehäuses 30 in besonderer Weise ausgebildet. Diese umgreifen nämlich mit einer ihrer Wandungen die Spindel 40 auf ihrer dem in Figur 1 dargestellten Mutternelement 50 zugeordneten Seite mindestens teilweise, im vorliegenden Ausführungsbeispiel von Figur 2 U-förmig. Wenngleich es zur Erhöhung der Crash-Festigkeit bereits ausreichend wäre, lediglich eines der Metalleinlegeteile 60, 70 vorzusehen, werden vorzugsweise beide Metalleinlegeteile in der in Figur 2 dargestellten Art und Weise in den Gehäuseteilen 80, 90 platziert.

Das Metalleinlegeteil 60 weist eine erste Wandung 60a auf, welche parallel zur Spindelachse A der Spindel 40 verläuft und etwas länger als die Spindelmutter 42 ausgebildet ist. Von dieser Wandung 60a des Metalleinlegeteils 60 erstrecken sich zwei Wandungen 60b und 60c im rechten Winkel zur Spindelachse A hin. Die abgewinkelte Wandung 60c ist massiv gestaltet und dazu vorgesehen, die Abschlussplatte 41 am Ende der Spindel 40 zu hintergreifen. Die vordere Wandung 60b ist, wie die hintere Wandung 60c auch, orthogonal zur Achse A der Spindel 40 ausgerichtet und verfügt über eine U-förmige Öffnung 60h, durch welche die Spindel 40 ragen kann. An der oberen Seite dieser U-förmigen Wandung 60b ist im rechten Winkel eine weitere Wandung 60d in Richtung Mutterelement 50 abgewinkelt und weist eine kreisförmige Öffnung 60e auf. Diese Wandung 60d mit der zugehörenden Öffnung 60e dient als Befestigungslasche, um das Getriebegehäuse 30 in der in Figur 1 dargestellten Art und Weise an dem oberen Teil 10 und damit der Oberschiene mittels einer geeigneten Schraubverbindung zu befestigen.

Wie aus Figur 2 ersichtlich, erstreckt sich von der Wandung 60a nach oben in etwa parallel ein weiteres, kreisringförmiges Wandungsteil 60f, welches eine kreisförmige Öffnung 60d aufweist. Dieses Wandungsteil 60f umgreift den in Figur 2 dargestellten hinteren Flansch der Antriebsschnecke 44 und dient zum einen zur weiteren Stabilitätserhöhung des gesamten Getriebegehäuses 30 und zum anderen wird durch dieses Wandungsteil 60f sichergestellt, dass die Reibungs- bzw. Friktionswärme , die bei Drehung der Antriebsschnecke 44 entsteht, sehr gut abgeführt werden kann.

Anzumerken ist, dass das Wandungsteil 60f und auch die Wandung 60b mit ihrer U-fömrigen Öffnung 60h nicht unmittelbar mit der Antriebsschnecke 44 bzw. der Spindel 40 in Kontakt tritt. Vielmehr dienen als Lagerstellen für die Schnecke 44 und die Spindel 40 ausschließlich Wandungsteile des Gehäuseteils 80, die, wie erwähnt, aus Kunststoff bestehen. Zweckmäßigerweise ist hierfür die Wandung 60f mit der Öffnung 60g und die Wandung 60b mit der U-förmigen Öffnung 60h allseitig von Kunststoff des Gehäuseteils 80 umspritzt, so dass die Lagerstellen für die Schnecke 44 und die Spindel 40 ausschließlich Kunststofflagerstellen sind, die in das Gehäuseteil 80 bzw. 90 integriert sind.

Obwohl, wie bereits erwähnt, das zweite Metalleinlegeteil 70 nicht unbedingt notwendig wäre, hat es sich als vorteilhaft erwiesen, dieses zur weiteren Erhöhung der Crash-Festigkeit des Getriebegehäuses 30 einzusetzen. Dieses zweite Metalleinlegeteil 70 ist ähnlich gestaltet wie das erste Metalleinlegeteil 60, weist jedoch die erwähnte Befestigungslasche nicht auf, obwohl eine solche Befestigungslasche auch hier vorgesehen werden könnte, wenn eine erhöhte Festigkeit bei der Montage des Gebriebegehäuses 30 an die Oberschiene 10 gewünscht wird. Im Einzelnen verfügt das zweite Metalleinlegeteil 70 ebenfalls über eine parallel zur Achse A der Spindel 40 verlaufende Längswandung 70a, von der sich zur Achse A der Spindel 40 hin eine hintere Wandung 70c erstreckt, die massiv ausgebildet ist und eine hierzu verlaufende parallele, vordere Wandung 70b, die ebenfalls eine U-förmige Öffnung 70h zum mindestens teilweise Umgreifen der Spindel 40 umfasst. Zusätzlich ist an die Längswandung 70a oben in ähnlicher Weise wie bei dem Einlegeteil 60 eine ringförmige Wandung 70f mit einer Öffnung 70e vorgesehen, um den in Figur 2 dem Betrachter zugewandten Flansch der Antriebsschnecke 60 zu umgreifen. Auch diese Wandung 70f dient vor allem zur Wärmeabfuhr, aber auch zur Stabilitätserhöhung des gesamten Getriebegehäuses 30.

Wie bereits im Zusammenhang mit dem ersten Metalleinlegeteil 60 und dem Gehäuseteil 80 erwähnt, ist auch das zweite Metalleinlegeteil 70 von dem Gehäuse 90 aus Kunststoff so umgeben, dass sämtliche Lagerstellen, also die Lagerstelle für den Flansch der Antriebsschnecke 44 und die Lagerstelle für die Spindel 40 nicht mit dem Metalleinlegeteil 70 in Berührung kommt, sondern vielmehr mit dem Kunststoff des Gehäuseteils 90.

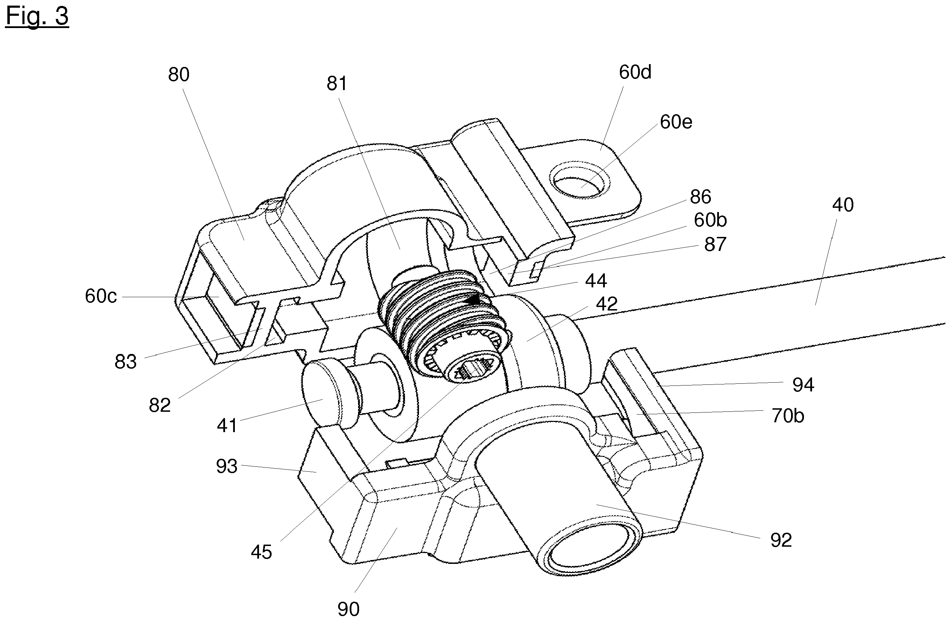

In Figur 3 ist das Verstellgetriebe von Figur 1 und Figur 2 weiterhin in perspektivischer Ansicht dargestellt, allerdings jetzt von schräg hinten oben, wobei in die Gehäuseteile 80, 90 die Metalleinlegeteile 60, 70 bereits eingefügt bzw. eingespritzt sind.

Es ist deutlich zu erkennen, dass die Wandung 60d mit ihrer Öffnung 60e des ersten Metalleinlegers 60 aus dem Gehäuseteil 80 vorne herausragt. Das Gehäuseteil 80 weist eine Öffnung 81 auf, in welche die Spindelmutter 42 und die Antriebsschnecke 44 einschiebbar sind. Diese Öffnung 81 wird auf ihrem in Figur 3 links gezeigten Ende von einer schlitzförmigen Tasche 82 begrenzt, in welche die Abschlussplatte 41 der Spindel 40 einschiebbar ist. Diese Tasche 82 ist von einem Wandabschnitt 83 des Gehäuseteils 80 nach hinten hin begrenzt. Dieser Wandabschnitt 83 wird von der Wandung 60c des Metalleinlegeteils 60 hintergriffen. Auf der der Tasche 82 gegenüberliegenden Seite der Öffnung 81 des Gehäuseteils 80 befindet sich eine U-förmige Öffnung 86, die als Lagerstelle für die Spindel 40 dient und voll umfänglich von Kunststoff des Gehäuseteils 80 begrenzt ist. Dieser Bereich der Lagerstelle ist mit dem Bezugszeichen 87 versehen. Der Wandabschnitt 60b des Metalleinlegeteils 60 kann damit mit der Spindel 40 nicht in Kontakt kommen.

In das zweite Gehäuseteil 90 ist das zweite Metalleinlegeteil 70 eingebettet. In Figur 3 ist lediglich die Wandung 70b des Metalleinlegeteils 70 erkennbar. Auch hier ist deutlich zu sehen, dass die Wandung 70b zur Spindel 40 hin von Kunststoff des zweiten Gehäuseteils 90 bedeckt ist, so dass das Metalleinlegeteil 70 ebenfalls nicht mit der Spindel 40 in Kontakt treten kann. Dass Gehäuseteil 90 weist zwei zum Gehäuseteil 80 ragende Wandteile 93, 94 auf, mit denen das Gehäuse 90 in entsprechende Ausnehmungen des Gehäuseteils 80 einsteckbar ist. So hintergreift das Wandteil 93 des Gehäuseteils 90 beim Zusammenstecken der Gehäuseteile 80 und 90 die Wandung 60c des ersten Metalleinlegeteils 60, während das Wandteil 94 des Gehäuses 90 mit der Wandung 70b des zweiten Metalleinlegteils 70 vor der Wandung 60b des ersten Metalleinlegeteils 60 zu liegen kommt.

Im zusammengesteckten Zustand der Gehäuseteile 80, 90 mit den darin befindlichen Metalleinlegeteilen 60, 70 wird somit die Spindel 40 an ihrer dem Mutterelement 50 zugewandten Seite mit zwei Wandungen 60b, 70b dort Metalleinlegeteile 60, 70 umgriffen, so dass im Crash-Fall das gesamte Getriebegehäuse 30 sehr gut die Crash-Kräfte aufnehmen kann. Die Crash-Festigkeit wird weiter dadurch erhöht, dass sich die Abschlussplatte 41 an ebenfalls zwei unmittelbar hintereinander liegenden Metallwandungen, nämlich den Wandungen 60c und 70c der Metalleinlegeteileteile 60 und 70 abstützen kann.

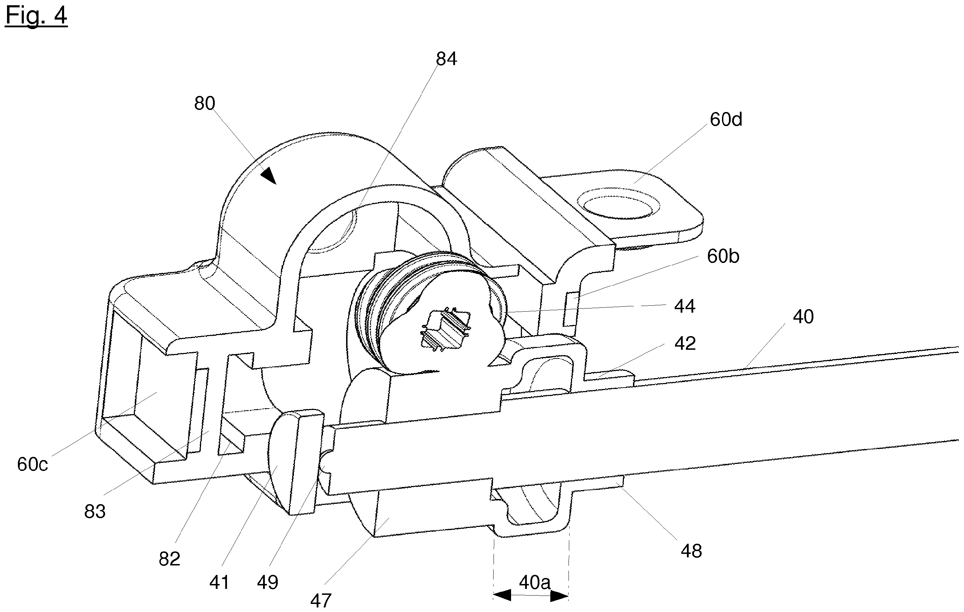

Figur 4 zeigt eine ähnliche Ansicht des Getriebes wie in Figur 3, allerdings jetzt ohne das zweite Gehäuseteil 90, wobei die Spindel 40 entlang einer Ebene in der die Spindelachse A liegt, geschnitten ist. Neben der Schnittdarstellung der Spindel 40 ist auch die Spindelmutter 42, die Antriebsschnecke 44 und die Abschlussplatte 41 geschnitten gezeichnet. Die Abschlussplatte 41 ist nicht mit dem Ende der Spindel 40 feststehend verbunden. Vielmehr ist in das stirnseitige Ende der Spindel 40 ein Kugelelement 49, vorzugsweise eine Stahlkugel eingebracht, die etwas aus der Stirnseite der Spindel 40 hervorragt. Dieses Kugelelement 49 dient als exiales Lagerelement. Die Abschlusslatte 41 kann mittig eine Mulde aufweisen, in welcher das Kugelelement 49 anliegen kann. Die bereits bekannten Bezugszeichen stehen für die erläuterten Teile, wobei in Figur 4 noch die Lagerstelle 84 für den dem Betrachter abgewandten Flansch der Antriebsschnecke 44 gut zu erkennen ist. Diese Lagerstelle 84 ist vollumfänglich von Kunststoff begrenzt. Die im Zusammenhang mit in Figur 2 erläuterte Wandung 60g des Metalleinlegeteils 60 ist hier vom Kunststoff des Gehäuseteils 80 umspritzt.

Zur weiteren Erhöhung der Crash-Festigkeit des Getriebes ist die Spindel 40 in dem mit dem Bezugszeichen 40a in Figur 4 angegebenen Bereich verdickt ausgebildet, weist also in diesem Bereich 40a einen größeren Durchmesser auf als im übrigen Bereich der Spindel 40. Diese Verdickung dient dem radialen und axialen Formschluss. Bezugnehmend auf die Spindelachse A der Spindel 40 ist vor und hinter diesem verdickten Bereich eine Buchse 47, 48 vorgesehen und auf die Spindel 40 aufgesetzt. Diese Buchsen 47, 48 bestehen vorzugsweise aus Metall. Im Crash-Fall stützt sich dieser verdickte Bereich 40a der Spindel 40 über die Buchsen 47 bzw. 48 an den metallischen Wandungen 60c bzw. 70c und 60b bzw. 70b der Metalleinlegeteile 60 und 70 ab.

### Bezugszeichenliste

- 5: Sitz

- 10: erstes Teil, Oberschiene

- 12: zweites Teil, Unterschiene

- 20: Befestigungsbügel
- 21: Bohrung
- 22: Befestigungsbügel
- 23: Bohrung

- 30: Getriebegehäuse

- 32: Kunststoffwandung

- 40: Spindel
- 40a: Abschnitt der Spindel 40 mit vergrößertem Durchmesser
- 41: Abschlussplatte
- 42: Spindelmutter
- 44: Antriebsschnecke
- 45: Öffnung
- 47: Buchse
- 48: Buchse
- 49: Kugelelement

- 50: Mutterelement
- 51: Mutternblock
- 52: U-Bügel
- 53: Befestigungslaschen
- 54: Bohrungen
- 56: Bohrungen

- 60: erste Metalleinlegeteil
- 60a: Wandung
- 60b: Wandung
- 60c: Wandung
- 60d: Wandung
- 60e: Öffnung
- 60f: Wandung
- 60g: Öffnung
- 60h: U-förmige Öffnung

- 70: zweite Gehäuseschale
- 70a: Wandung
- 70b: Wandung
- 70c: Wandung
- 70f: Wandung
- 70g: Öffnung
- 70h: U-förmige Öffnung

- 80: erstes Gehäuseteil
- 81: Öffnung
- 82: Tasche
- 83: Wandabschnitt
- 84: Lagerstelle
- 86: U-förmige Öffnung

- 90: zweites Gehäuseteil
- 92: Flansch
- 93: Wandteil
- 94: Wandteil

- A: Spindelachse

## Patentansprüche

1. Verstellgetriebe, insbesondere zur Sitzlängsverstellung eines KFZ-Sitzes, mit einem Getriebegehäuse (30), das an einem ersten Teil (10) festgelegt ist, welches relativ zu einem zweiten Teil (12) verschieblich ist, wobei innerhalb des Getriebegehäuses (30) ein Getriebe angeordnet ist und aus dem Getriebegehäuse (30) eine Spindel (40) hervorragt, die, über ein Mutterelement (50) an das zweite Teil (12) gekoppelt ist, wobei das Getriebegehäuse (30) aus Kunststoff besteht und in den Kunststoff mindestens ein mehrfach abgewinkeltes Metalleinlegeteil (60) eingebettet ist,
**dadurch gekennzeichnet, dass** zwei Wandungen (60b, 70b) eines oder mehrerer Metalleinlegeteile (60, 70) unmittelbar hintereinander orthogonal zur Spindelachse (A) ausgerichtet sind und die Spindel (40) mindestens teilweise umgreifen.

2. Verstellgetriebe nach Anspruch 1,
**dadurch gekennzeichnet, dass** die orthogonal zur Spindelachse (A) ausgerichtete und die Spindel (40) mindestens teilweise umgreifende Wandung (60b) des Metalleinlegeteils (60) auf der dem Mutterelement (50) zugeordneten Seite des Getriebegehäuses (30) angeordnet ist.

3. Verstellgetriebe nach Anspruch 1 oder 2,
**dadurch gekennzeichnet, dass** die beiden Gehäusewandungen (60b, 70b) jeweils aus einem einstückigen Metalleinlegeteil (60) abgewinkelt sind.

4. Verstellgetriebe nach Anspruch 1, 2 oder 3,
**dadurch gekennzeichnet, dass** die beiden Wandungen (60b, 70b) Bestandteile von zwei verschiedenen ineinandergreifenden Metalleinlegeteilen (60, 70) sind.

5. Verstellgetrieben nach einem der Ansprüche 1 bis 4,
**dadurch gekennzeichnet, dass** das mindestens eine Metalleinlegeteil(60, 70) so in das Getriebegehäuse (30) aus Kunststoff eingebettet ist, dass sämtliche Lagerstellen des Getriebegehäuses (30) vollumfänglich aus Kunststoff bestehen oder von Kunststoff umgeben sind.

6. Verstellgetriebe nach einem der Ansprüche 1 bis 4,
**dadurch gekennzeichnet, dass** mindestens eine weitere Wandung (60c, 70c) am Metalleinlegeteil (60, 70) vorgesehen ist, die orthogonal zur Spindelachse (A) ausgerichtet und auf der dem Mutterelement (50) abgewandten Seite des Getriebegehäuses (30) angeordnet ist.

7. Verstellgetriebe nach einem der Ansprüche 1 bis 6,
**dadurch gekennzeichnet, dass** an das mindestens eine Metalleinlegeteil (60) eine Wandung (60d) als Befestigungslasche für das Getriebegehäuse (30) an dem ersten Teil (10) einstückig angeformt hat.

8. Verstellgetriebe nach einem der vorhergehenden Ansprüche,
**dadurch gekennzeichnet, dass** mindestens eine Metalleinlegeteil (60, 70) als Stanzbiegeteil ausgebildet ist.

9. Verstellgetriebe nach einem der vorhergehenden Ansprüche,
**dadurch gekennzeichnet, dass** an das Getriebegehäuse (30) aus Kunststoff ein rohrförmiger Flansch (92) zum Einführen einer Antriebswelle angeformt ist.

10. Verstellgetriebe nach einem der vorhergehenden Ansprüche,
**dadurch gekennzeichnet, dass** bei Verwendung mehrerer abgewinkelter Metalleinlegeteile (60, 70) diese aneinander befestigt, insbesondere verschweißt sind.

11. Verstellgetriebe nach einem der vorhergehenden Ansprüche, **dadurch gekennzeichnet, dass** durch das im Getriebegehäuse (30) sitzende Getriebe die Spindel (40) in Drehung versetzbar ist.

12. Verstellgetriebe nach einem der vorhergehenden Ansprüche, **dadurch gekennzeichnet, dass** der Kunststoff des Getriebegehäuses (30) farblich an das erste Teil (10) oder zweite Teil (12) oder eine mit diesen beiden Teilen (10, 12) verbundene Einrichtung angepasst ist.

13. Verstellgetriebe nach einem der Ansprüche 1 bis 12,
**dadurch gekennzeichnet, dass** die Spindelmutter (42) auf die Spindel (40) als Kunststoffteil aufgespritzt ist.

14. Verstellgetriebe nach einem der Ansprüche 1 bis 13,
**dadurch gekennzeichnet, dass** die Spindel (40) einen Abschnitt (40a) mit vergrößertem Durchmesser im Bereich der Spindelmutter (42) aufweist.

15. Verstellgetriebe nach einem der Ansprüche 1 bis 14,
**dadurch gekennzeichnet, dass** die Spindel (40) an einem Ende mit einer Abschlussplatte (41) gekoppelt ist, welche in eine Tasche (82) des Getriebegehäuses (30) eingesetzt ist.

## Claims

1. Adjustment gearing, in particular for longitudinal seat adjustment in a motor vehicle, having a gear housing (30) which is fixed to a first part (10) which is able to be moved relative to a second part (12), wherein a gear is arranged within the gear housing (30) and a spindle (40) protrudes from the gear housing (30), said spindle being coupled to the second part (12) via a nut element (50), wherein the gear housing (30) consists of plastic, and at least one multi-angled material insert (60) is embedded in the plastic,
**characterised in that**
two walls (60b, 70b) of one or more metal inserts (60, 70) are aligned one directly behind the other orthogonally to the spindle axis (A) and at least partially encompass the spindle (40).

2. Adjustment gearing according to claim 1,
**characterised in that**
the wall (60b) of the metal insert (60), which is aligned orthogonally to the spindle axis (A) and at least partially encompasses the spindle (40), is arranged on the side of the gear housing (30) allocated to the nut element (50).

3. Adjustment gearing according to claim 1 or 2,
**characterised in that**
the two housing walls (60b, 70b) are respectively angled from a one-piece metal insert (60).

4. Adjustment gearing according to claim 1, 2 or 3,
**characterised in that**
both walls (60b, 70b) are components of two different metal inserts (60, 70) which engage with each other.

5. Adjustment gearing according to one of claims 1 to 4,
**characterised in that**
at least one metal insert (60, 70) is embedded in the gear housing (30) made from plastic in such a way that all bearing points of the gear housing (30) consist entirely of plastic or are surrounded by plastic.

6. Adjustment gearing according to one of claims 1 to 4,
**characterised in that**
at least one further wall (60c, 70c) is provided on the metal insert (60, 70), said wall being aligned orthogonally to the spindle axis (A) and being arranged on the side of the gear housing (30) facing away from the nut element (50).

7. Adjustment gearing according to one of claims 1 to 6,
**characterised in that**
a wall (60d) has been moulded in one piece to the at least one metal insert (60) as a fastening clip for the gear housing (30) on the first part (10).

8. Adjustment gearing according to one of the preceding claims,
**characterised in that**
at least one metal insert (60, 70) is formed as a stamped bent part.

9. Adjustment gearing according to one of the preceding claims,
**characterised in that**
a tubular flange (92) is moulded to the gear housing (30) made from plastic for the introduction of a drive shaft.

10. Adjustment gearing according to one of the preceding claims,
**characterised in that**
when using several angled metal inserts (60, 70), these are attached to one another, in particular welded.

11. Adjustment gearing according to one of the preceding claims,
**characterised in that**
the spindle (40) can be set into rotation by the gearing located in the gear housing (30).

12. Adjustment gearing according to one of the preceding claims,
**characterised in that**
the plastic of the gear housing (30) is matched in colour to the first part (10) or second part (12) or a device connected to these two parts (10, 12).

13. Adjustment gearing according to one of claims 1 to 12,
**characterised in that**
the spindle nut (42) is moulded on the spindle (40) as a plastic part.

14. Adjustment gearing according to one of claims 1 to 13,
**characterised in that**
the spindle (40) has a section (40a) with an enlarged diameter in the region of the spindle nut (42).

15. Adjustment gearing according to one of claims 1 to 14,
**characterised in that**
the spindle (40) is coupled on one end to a cover plate (41) which is inserted into a pocket (82) of the gear housing (30).

## Revendications

1. Transmission de réglage en particulier pour permettre le réglage de longueur d'un siège de véhicule comprenant un carter de transmission (30) qui est fixé à une première pièce (10) susceptible de coulisser par rapport à une seconde pièce (12), une transmission étant montée à la partie interne du carter de transmission (30), et, de ce carter de transmission (30) dépassant une broche (40) qui est couplée à la seconde pièce (12) par l'intermédiaire d'un élément d'écrou (50), le carter de transmission (30) étant réalisé en matériau synthétique, et dans ce matériau synthétique étant noyé au moins un élément d'insertion métallique (60) à coudage multiple,
**caractérisée en ce que**
deux parois (60b, 70b) d'un ou de plusieurs éléments d'insertion métalliques (60, 70) sont orientés directement les uns derrière les autres perpendiculairement à l'axe de la broche (A) et entourent la broche (40) au moins partiellement.

2. Transmission de réglage conforme à la revendication 1,
**caractérisée en ce que**
la paroi (60b) de l'élément d'insertion métallique (60) orientée perpendiculairement à l'axe (A) de la broche et entourant au moins partiellement cette broche (40) et située sur le côté du carter de transmission (30) associé à l'élément d'écrou (50).

3. Transmission de réglage conforme à la revendication 1 ou 2, **caractérisée en ce que**
les deux parois de carter (60b, 70b) sont respectivement pliées à partir d'un élément d'insertion métallique (60) en une seule pièce.

4. Transmission de réglage conforme à la revendication 1 ou 2 ou 3, **caractérisée en ce que**
les deux parois (60b, 70b) sont des composants de deux éléments d'insertion métalliques (60, 70) différents venant en prise l'un dans l'autre.

5. Transmission de réglage conforme à l'une des revendications 1 à 4, **caractérisée en ce que**
l'éléments d'insertion métallique (60, 70) est noyé dans le carter de transmission (30) en matériau synthétique de sorte que la totalité des emplacements de montage du carter de transmission (30) soient en matériau synthétique sur la totalité de leur périphérie ou entourés de matériau synthétique.

6. Transmission de réglage conforme à l'une des revendications 1 à 4, **caractérisée en ce qu'**
il est prévu au moins une autre paroi (60c, 70c) sur l'élément d'insertion métallique (60, 70) qui est dirigé perpendiculairement à l'axe (A) de la broche et est positionné sur le côté du carter de transmission (30) situé à l'opposé de l'élément d'écrou (50).

7. Transmission de réglage conforme à l'une des revendications 1 à 6, **caractérisée en ce que**
sur l'élément d'insertion métallique (60) est formée en une seule pièce une paroi (60d) en tant que languette de fixation pour le carter de transmission (30) sur la première pièce (10).

8. Transmission de réglage conforme à l'une des revendications précédentes,
**caractérisée en ce qu'**
au moins un élément d'insertion métallique (60, 70) est réalisé sous la forme d'un élément replié par estampage.

9. Transmission de réglage conforme à l'une des revendications précédentes,
**caractérisée en ce que**
sur le carter de transmission en matériau synthétique (30) est formée une bride tubulaire (92) permettant l'introduction d'un arbre d'entraînement.

10. Transmission de réglage conforme à l'une des revendications précédentes,
**caractérisée en ce que**
lorsque l'on utilise plusieurs éléments d'insertion métalliques coudés (60, 70) ceux-ci sont fixés et en particulier soudés les uns aux autres.

11. Transmission de réglage conforme à l'une des revendications précédentes,
**caractérisée en ce que**
la broche (40) peut être mise en rotation par la transmission montée dans le carter de transmission (30).

12. Transmission de réglage conforme à l'une des revendications précédentes,
**caractérisée en ce que**
le matériau synthétique du carter de transmission (30) a une couleur adaptée à la première pièce (10) ou à la seconde pièce (12) ou à un dispositif lié avec ces deux pièces (10, 12).

13. Transmission de réglage conforme à l'une des revendications 1 à 12,
**caractérisée en ce que**
l'écrou de broche (42) est injecté sur la broche (40) sous la forme d'une pièce en matériau synthétique.

14. Transmission de réglage conforme à l'une des revendications 1 à 13,
**caractérisée en ce que**
la broche (40) a un segment (40a) ayant un diamètre augmenté dans la zone de l'écrou de broche (42).

15. Transmission de réglage conforme à l'une des revendications 1 à 14,
**caractérisée en ce que**
la broche (40) est accouplée à l'une de ses extrémités à une plaque de fermeture (41) qui est positionnée dans une poche (82) du carter de transmission (30).
